# EUROPEAN PATENT SPECIFICATION

(11) **EP 1 848 912 B1**
(45) Date of publication and mention of the grant of the patent: **29.07.2009**
(21) Application number: 06711408.2
(22) Date of filing: 02.02.2006
(51) Int. Cl.: F16L 19/06, F16L 19/08

(54) **FLUID TRANSPORT TUBE CONNECTOR FITTINGS**
FLUIDTRANSPORTROHRVERBINDERARMATUREN
ENSEMBLE DE RACCORDEMENT POUR TUBE SERVANT AU TRANSPORT DE FLUIDES

(30) Priority: 16.02.2005 IT GE20050015
(43) Date of publication of application: 31.10.2007
(73) Proprietor: Unidelta SPA, I-25078 Vestone (BS) (IT)
(72) Inventor: FREDDI, Maurilio, I-25078 Vestone (BS) (IT)
(74) Representative: Sangiacomo, Fulvia
(86) International application number: PCT/IT2006/000054
(87) International publication number: WO 2006/087749

(56) References cited:
- EP-A- 1 380 788
- BE-A- 588 317
- US-A- 1 823 061
- US-B1- 6 378 915

## Description

### Field of the Invention

This invention concerns a connector fitting for fluid transport tubes, for example, water.

### Prior Art

As is known there are connector fittings comprising a coupling and a ring nut fitted around a tube and both connected by screwing. The ring nut has an internal serrated ring to grip the tube and to tighten around it by screwing said ring nut onto the coupling. At one of its ends this coupling has at least one opening for inserting the tube to be coupled and can be provided on the other end with a closing wall if this tube is to be used as the final length of a fluid transport duct. The screwing and tightening operation of the screw around the coupling may be rather long and laborious, in particular for the tightening phase of the serrated ring around the surface of the tube and furthermore, the sealing gaskets which are usually housed between the coupling and the ring nut are subjected to considerable stress.

The document US 6378915 is representative of the state of the technique. It concerns a pipe coupling or connector but it is conceived to use, as a sealing element around the pipe, an axially compressible gasket, and correspondingly a compression sleeve which engages with said gasket to compress it in an initial phase of the tightening of the coupling.

The document BE 588317 relates to a pipe coupling that uses, as a sealing element around the pipe, a O-ring seal, and, as a tightening element, a gripping ring which acts on the O-ring through a tubular element, and whose stroke is limited when it rests directly against the tubular element that receives the pipe and the 0-ring.

The document US 1823061 concerns a pipe in which, however, a seal is not provided and where a gripping ring and locking nut engage each/other through conical and threaded parts, when the locking nut is screwed on a threaded part of a nipple.

### Object and Summary of the Invention

An objective of this invention is to provide a fitting for tubes transporting fluids than allows screwing of the ring nut to the coupling and tightening of the serrated ring around the tube which is rapid and easy to carry out.

This objective is reached by this invention through the use of a connector fitting for tubes transporting fluids according to claim 1, and which is advantageously applicable where an O-ring seal is provided as sealing means between the coupling body and the pipe, that is to say where the sealing means does not require a compression.

### Brief Description of the Drawings

Further characteristics and advantages of this invention will be better understood from the following description, considered as indicative and not limiting and referred to the enclosed drawings, in which:
- Fig. 1 shows a lateral elevation and sectional view of a tube on which a connector fitting for fluid transport tubes is applied comprising a coupling and ring nut which can be screwed to said coupling;
- Fig. 2 shows a lateral elevation and sectional view of the connector fitting in Fig. 1, with relative ring nut partially screwed onto the coupling;
- Fig. 3 shows a lateral elevation and sectional view of the connector fitting in Figs. 1 and 2 comprising internally a first ring provided with teeth for connecting to the tube and a second ring provided with a first ring shaped component and a second ring shaped component fitted to push a seal into a cylindrical housing machined in said coupling;
- Fig. 4 shows a lateral elevation and exploded view of said first ring provided with teeth for connecting to the tube and said second ring shown in the previous figures;
- Fig. 5 shows a lateral elevation view of said first and second ring in Fig. 4 connected one to the other by means of a pin;
- Fig. 6 shows a front view according to the line VI-VI in Fig. 4 of said second internal ring of this fitting.
- Fig. 7 shows a further lateral elevation view according to line VII-VII in Fig. 6 of said second ring;
- Fig. 8 shows a further front view according to line VI-VI in Fig. 4 of said second internal ring which has received some changes in plan; and
- Fig. 9 shows a lateral elevation view according to line IX/IX in Fig. 8 of said second internal ring.

### Detailed Description of the Invention

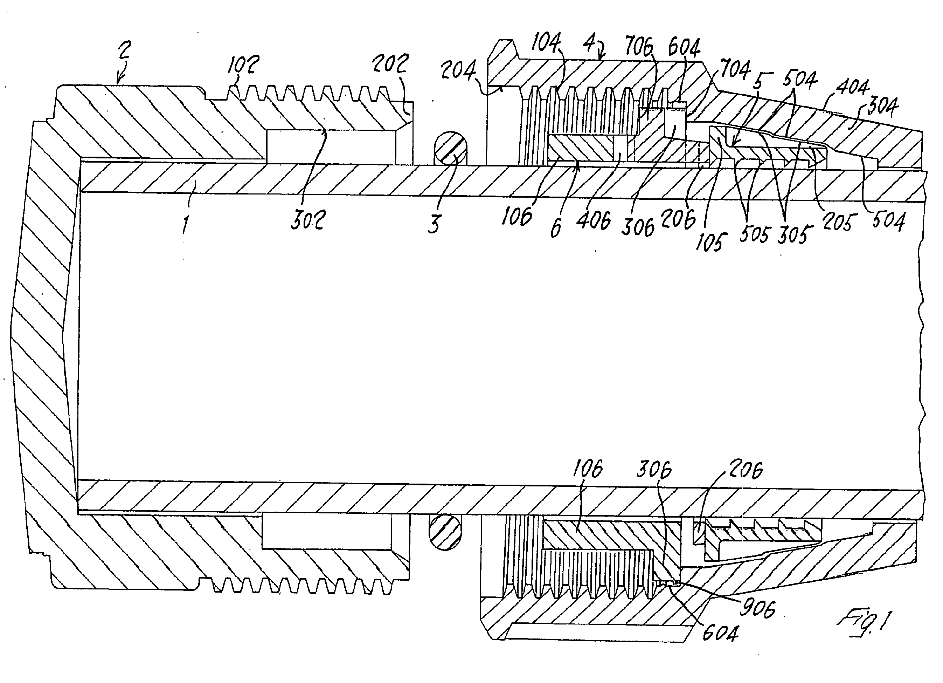

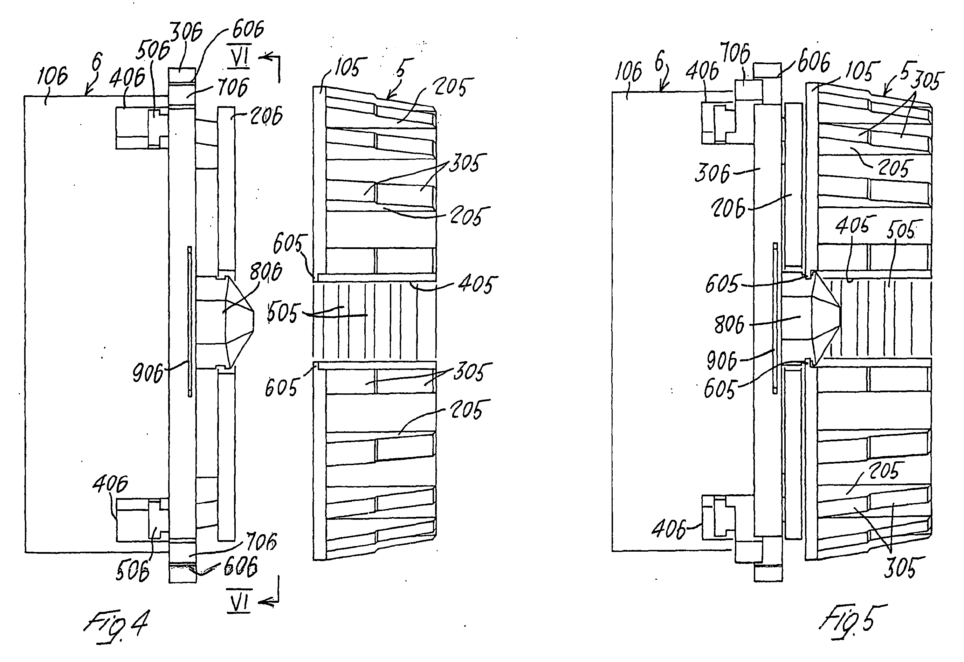

With reference to said enclosed drawings and in particular to Fig. 1, the reference 1 shows a tube for transporting fluids, for example water. Looking at the drawing, the left end of said tube 1, is inserted into a coupling 2, which, in this example, is closed at one end and therefore stops the flow of the fluid inside tube 1. Evidently this coupling 2 could be open at both ends and therefore allow coupling at either of its ends of two adjacent fluid transport tubes. Said coupling 2 therefore comprises on at least one end a round opening 202 and a length with external threading 102 starting from said round opening 202 inside which a cylindrical housing 302 has been provided. An O-ring seal 3 has been fitted around tube 1 so as to be inserted and come into contact with the bottom of said round housing 302. Number 4 shows a ring nut which comprises a first part threaded on the inside 104 having a constant diameter and larger than the diameter of the external threaded length 102 of the coupling 2. The internally threaded part 104, level with the end facing towards said coupling 2 comprises an opening 204 and is provided to engage with said externally threaded portion 102 of coupling 2. This ring nut 4 also comprises a second part 304 with an external truncated cone shape surface 404 and an internal surface made up of three truncated cone lengths 504 having substantially the same inclination, with diameter and internal section decreasing as it moves away from the internal threaded length 104 and forming a triple cone. Between said internally threaded part 204 and said second part 304 an annular contact surface 704 is provided. Inside said ring nut 4 is shown a first ring 5, visible also in Fig. 4, comprising externally a collar 105 and a number of wedges 205, the external surface of each is made up of two truncated cone lengths 305, having substantially the same inclination, with diameter and internal section decreasing as it moves away from the collar 105 forming a double cone. Ring 5 is also made up of a longitudinal opening 405 provided to allow it to be tightened around tube 1 and, on the internal surface, raised gripping teeth 505. This longitudinal opening 405 has two steps 605 level with the edge of the collar.

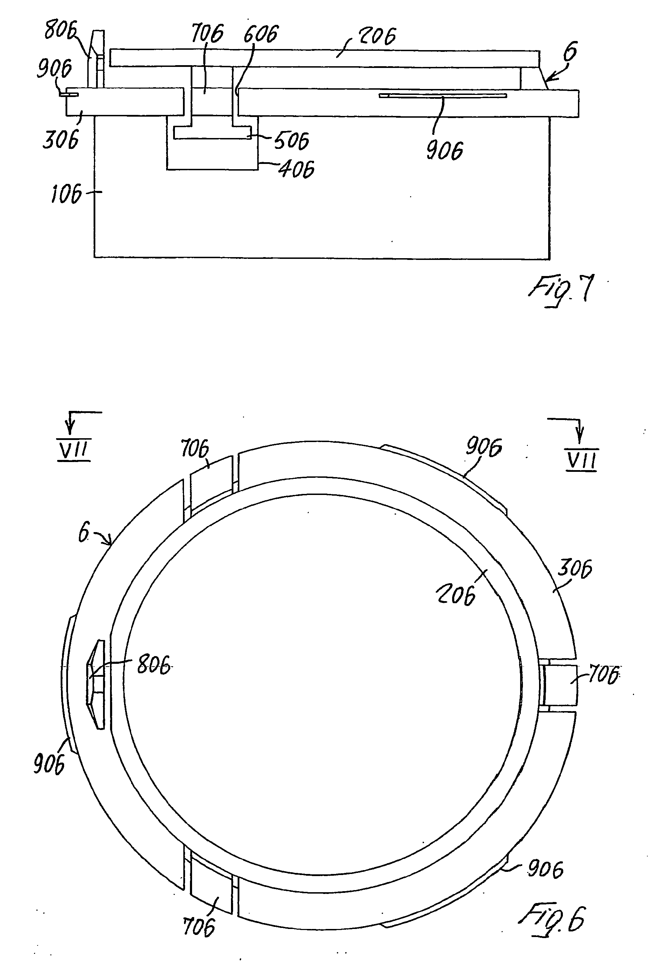

A second ring 6 is fitted around the tube 1 and inside the ring nut 4, which is made up of two different annular components 106 and 206, visible in Figs 5, 6 and 7. The first annular component 106 comprises, towards the second annular component 206, a collar 306, provided to come into contact with said annular surface 704 present between said internally threaded part 104 and said second part 304 of the ring nut 4. Some grooves 406, in this case three, have been machined in said first annular component 106 level with the collar 306; a plate 506, connected to the second annular component 206 by means of a specially shaped leg 706 is free to move longitudinally in each of the grooves, without the possibility of exiting from them. In collar 306 in fact, and level with each of said grooves 406, there is a longitudinal opening 606 for said leg 706 to slide in: this longitudinal opening 606 has a narrower passage width than the relative groove 406 and plate 506, see Fig. 7. The front surface of the collar 306 of the first annular component 106 has a pin 806 provided to link up to the two steps 605 provided in the longitudinal opening 405 of the first ring 5. Comparing Fig. 4 and Fig. 5 this pin linked to steps 605 can be seen and the second annular component 206 in contact with the surface of the collar 306 of the first annular component 106 of the second ring 6, thanks to the sliding of the plates 506 with relative legs 706 along the grooves 406 and the longitudinal openings 606. Protruding teeth 906, in this case three, fixed in a ring-shaped groove 604 provided on the ring nut 4 between the first internally threaded part 104 and the second part 304 with triple taper are provided on the lateral surface of the collar 306 of the first annular component 106.

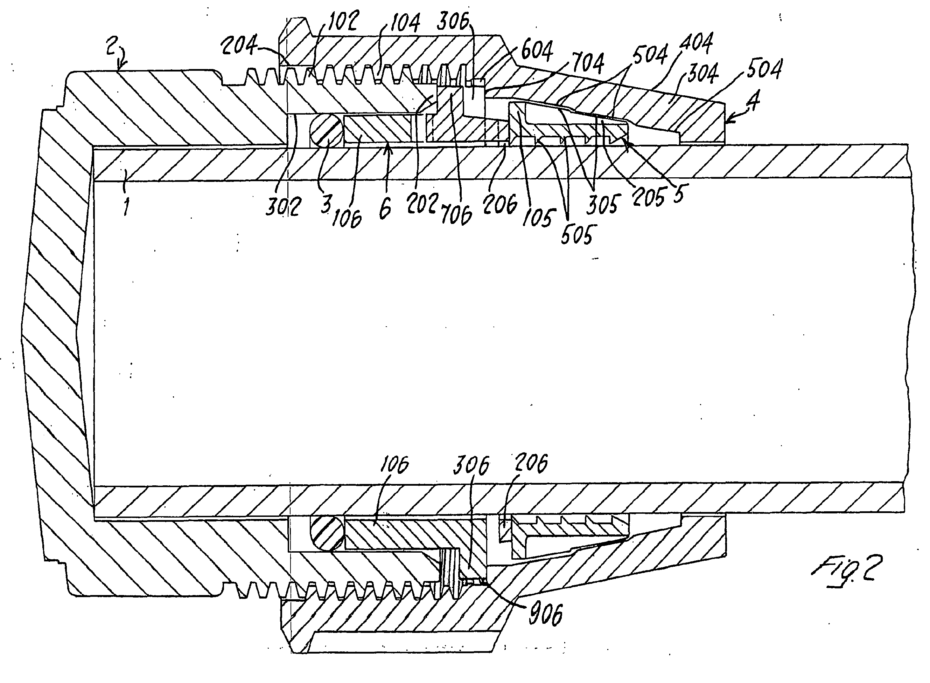

Fig. 2 shows a partially tightened position of the ring nut 4 on the coupling 2, with the O-ring seal 3 partially inserted in the cylindrical housing 302 of said coupling 2. By screwing the internally threaded part 104 of the ring nut 4 onto the externally threaded length 102 of the coupling 2, the first annular component 106 of the second ring 6 has the task of pushing said O-ring seal 3 towards the bottom of said cylindrical housing 302, by means of the contact of the rounded stop surface 704 of the ring nut 4 against the collar 306 of said first annular component 106, and to sustain the operating pressure force. The second annular component 206 of said second ring 6 on the other hand, has the task, always by screwing the ring nut 4 on the coupling 2, to move into contact, by means of the legs 706, against the front surface of the round shaped opening 202 of the coupling 2 and therefore to cause the stop of the forward movement of the same annular component 206 and ring 5 provided with locking teeth 505.

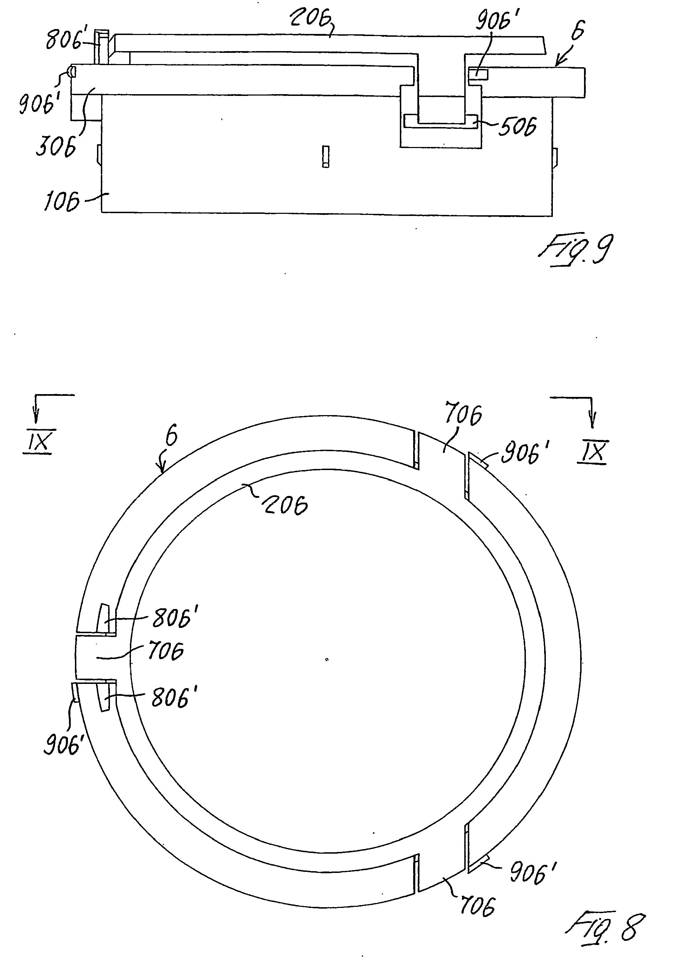

Figs 8 and 9 show the second internal ring 6 of this connector fitting, which has variations to the work plan: the pin 806', provided to link up to the two steps 605 provided in the longitudinal opening 405 in the first ring 5, is divided into two symmetric parts and is positioned level with one of the legs 706; and the protruding teeth 906', fixed in the round shaped groove 604 provided in the ring nut 4 between the first internally threaded part 104 and the second part 304 with triple taper, are always to be found on the collar 306 but with a shorter length and an increased width compared to the previously described protruding teeth 906.

Therefore, in order to screw this connector fitting to tube 1, first of all place in position the coupling 2, ring nut 4, with the first ring 5 provided with gripping teeth 505 and the second ring 6 made up of two annular components 106 and 206, and the O-ring seal 2 on the tube 1; move ring nut 4 and O-ring 3 towards the coupling and then screw said ring nut 4 by hand onto said coupling 2.

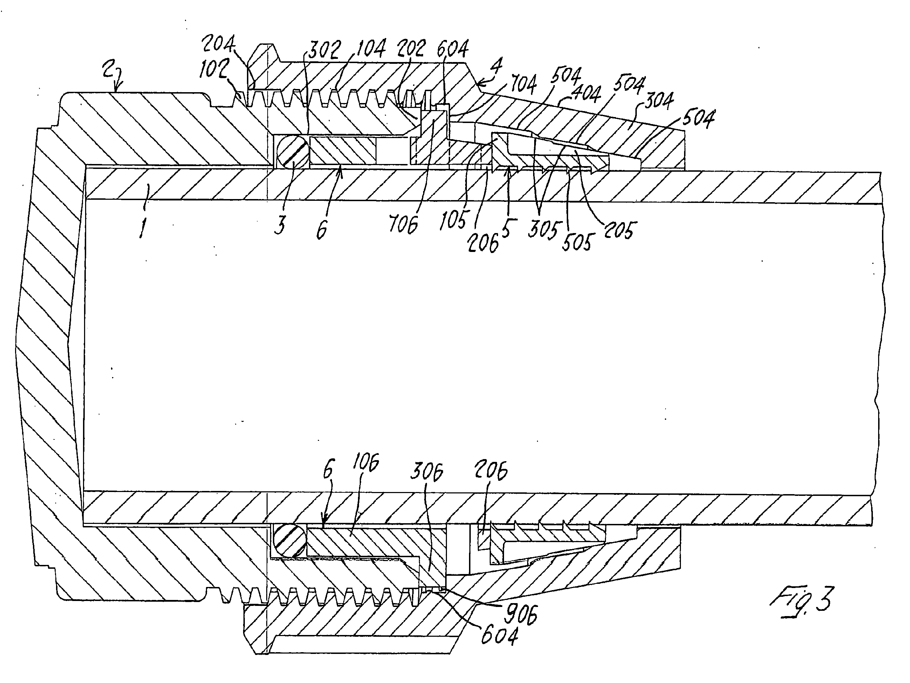

By continuing to tighten the internally threaded part 104 of the ring nut 4 onto the external threaded part 102 of the coupling 2, see Fig. 3, the O-ring seal 3 reaches the bottom of the cylindrical housing 302 of said coupling 2. The ring 3, from the moment the second annular component 206 is, by means of the legs 706, in contact with the edge of the circular opening 202 of the coupling 2, can no longer move forward and consequently the external surfaces 305 of the double taper wedges 205 are obliged to slide along the three truncated conical lengths 504 of the ring nut 4. This gradual sliding without excessive stress thanks to said double and triple taper result in a diametric closing of the first ring 3, enabled by the longitudinal opening 405 provided in it, that, together with the relative teeth 505 grips the external surface of the tube 1. The two annular components 106 and 206 of the second ring 6 cannot be separated from each other, but, whereas the ring 3 slides along the internal surfaces 504 of the ring nut 4, the first annular component 106 with respect to the second annular component 206, slides by means of the plates 506 which move inside the relative grooves 406 un the opposite direction to the ring 3, enabling said O-ring seal 3 to reach the bottom of the cylindrical housing 302 of the coupling 2.

Should it be required, for greater safety, final tightening of this connector fitting can be carried out by turning the ring nut 4 about half a turn using a wrench. At this point the connector fitting can be used at the maximum operating pressure.

The raised teeth 906 on the lateral surface of the collar 306 of the first annular component 106 inserted in the annular grooving 604 inside the ring nut 4, prevent accidental unscrewing of the ring 6 of said ring not 4 during normal transport operations of this connector fitting.

## Claims

1. Connector fitting for fluid transport tubes, comprising a coupling (2) *having an external threaded portion (102)* and provided at the front with an opening (202) for inserting a tube (1), a ring nut (4) having at least one first *inner* ring (5) provided internally with teeth (505) to grip the external surface of said tube (1), *where*, in use, said ring nut (4) comprises a first internally threaded part (104) *to be engaged to the threaded portion (102) of said coupling (2)* and a second part (304) provided with means (504) for tightening said first ring (5), *where* around said tube (1), there *is* a second ring (6) provided with a first annular component (106) to push at least one seal (3) into a cylindrical housing (302) provided *in said coupling (2), starting* from *said* front opening (202), and a second annular component (206, 706) in contact with the border of said *front* opening (202) of said coupling (2) and *where* said first annular component (106) and said second annular component (206) are provided with *means* (406, 506, 606, 706) to allow a certain longitudinal movement of one with respect to the other wherein the seal (3), the first annular component (106) and the second annular component (206,706) are pants of the connector fitting and said first annular component (106) comprises a collar (306) provided to come into contact with an *annular* surface (704) provided in said ring nut (4) between said first internally threaded part (104) and said second part (304), **characterised in that**:
- said collar (306) of said first annular component (106) comprises at least one pin (806, 806') protruding longitudinally towards said first ring (5) and designed to engage with a pair of steps (605) provided on a level with the edge of a longitudinal opening (405) of said first ring (5).

2. Connector fitting according to claim 1, in which said collar (306) of said first annular component (106) comprises on its lateral surface a number of teeth (906, 906') provided to be inserted into special round shaped grooves (604) provided in said ring nut (4) between said first internally threaded part (104) and said second part (304).

3. Connector fitting according to claims 1 and 2, in which said first annular component (106) comprises a number of grooves (406) in which at least one plate (506) integral with said second annular component (206) slides without exiting.

4. Connector fitting according to claim 3, in which said collar (306) is made up of longitudinal openings (606) whose width is less than the width of said plate (506) and is provided to allow longitudinal sliding of a leg (706) connected on one side to the plate (506) and on the other side to said second annular component (206).

5. Connector fitting according to previous claims, in which said pin (806') is divided into two symmetric parts and positioned on a level with one of said legs (706).

6. Connector fitting according to claim 1, in which said second part (304) of the ring nut (4) comprises an internal surface made up of a number of truncated conical lengths (504) with decreasing internal cross section moving away from said internally threaded first part (104), having substantially the same inclination and made to form a multiple taper.

7. Connector fitting according to claim 2, in which said first ring (5) provided internally with gripper teeth (505) comprises an external surface made up of a number of truncated conical lengths (305) decreasing internal cross section moving away from said internally threaded first part (104 of the ring nut (4), having substantially the same inclination as said truncated conical lengths (504) provided internally in said second part (304) of the ring nut (4) and suitable for connecting up to the latter, as these truncated conical lengths (305) of said ring (5) are suitable for forming a multiple taper.

8. Connector fitting according to claim 3, in which said first ring (5) comprises an external surface made up of a number of wedges (205) positioned in a longitudinal direction and each provided with said truncated conical lengths (305).

9. Connector fitting according to claim 1, in which said first ring (5) provided internally with gripper teeth (505), comprises a longitudinal opening (405).

## Patentansprüche

1. Verbindungskupplung für Fluidbeförderungsrohre, einschließlich einer Muffe (2) mit einem externen Gewindeteil (102) und auf der Vorderseite mit einer Öffnung (202) zum Einsetzen eines Rohrs (1) versehen, eine Zwinge (4) bei der zumindest der erste Innenring (5) innen mit Kupplungszähnen (505) zur Kupplung an der Außenfläche dieses Rohrs (1) versehen ist, wo beim Gebrauch diese Zwinge (4) ein erstes Innengewindeteil (104) enthält, das dazu geeignet ist in das Gewindeteil (102) dieser Muffe (2) einzufallen und ein zweites Teil (304), das mit den Mitteln (504) versehen ist, die dazu geeignet sind den ersten Ring (5) anzuziehen, wo um dieses Rohr (1) herum ein zweiter Ring (6) vorgesehen ist, der mit einem ersten Ringelement (106) versehen ist, das dazu geeignet ist wenigstens einen Dichtungsring (3) in einen zylinderförmigen Sitz (302) zu schieben, der -von der genannten Öffnung auf der Vorderseite (202) ausgehend- in dieser Muffe (2) herausgearbeitet wurde und ein zweites Ringelement (206, 706) in Berührung mit dem Rand dieser Öffnung auf der Vorderseite (202) der genannten Muffe (2) und wo das genannte erste Ringelement (106) und das genannte zweite Ringelement (206) mit Mitteln (406, 506, 606, 706) versehen sind, die dazu geeignet sind ein gewisses longitudinales Gleiten gegeneinander zu ermöglichen, wobei der Dichtungsring (3), das erste Ringelement (106) und das zweite Ringelement (206, 706) Teile der Verbindungskupplung sind und das genannte erste Ringelement (106) einen Bund (306) einschließt, der dazu geeignet ist mit einer in der genannten Zwinge (4) ausgearbeiteten ringförmigen Oberfläche (704) zwischen dem genannten ersten Innengewindeteil (104) und dem genannten zweiten Teil (304) in Berührung zu kommen, **dadurch gekennzeichnet**, da **dadurch gekennzeichnet, dass:**
- der genannte Bund (306) des genannten ersten Ringelements (106) mindestens einen Bolzen (806, 806') enthält, der longitudinal in Richtung des genannten ersten Rings (5) hervorsteht und dazu geeignet ist in ein Paar Absätze (605) einzufallen, die am Rand einer longitudinalen Öffnung (405) des genannten ersten Rings (5) ausgearbeitet wurden.

2. Verbindungskupplung nach Anspruch 1, wobei der genannte Bund (306) des genannten ersten Ringelements (106) auf seiner Seitenfläche eine Vielfalt von Zähnen (906, 906') enthält, die dazu geeignet sind sich in eine entsprechende ringförmige Rille (604) einzufügen, die in der genannte Zwinge (4) zwischen dem genannten ersten Innengewindeteil (104) e dem genannten zweiten Teil (304) ausgearbeitet wurden.

3. Verbindungskupplung nach Anspruch 1 und 2, wobei der genannte erste Ringelements (106) eine Vielfalt von Rillen (406) enthält, in denen wenigstens ein fest an dem genannten zweiten Ringelement (206) angebrachtes Plättchen (506) gleitet, ohne aus der Rille zu springen.

4. Verbindungskupplung nach Anspruch 1, wobei der genannte Bund (306) aus longitudinalen Öffnungen (606) besteht, deren Breite weniger als die Breite des genannten Plättchens (506) beträgt und das dazu geeignet ist das longitudinale Gleiten eines Schaftes (706) zu ermöglichen, von dem ein Teil mit dem Plättchen (506) und das andere Teil mit dem genannten zweiten Ringelement (206) verbunden ist.

5. Verbindungskupplung nach den vorhergehenden Ansprüchen, wobei der genannte Bolzen (806') in zwei symmetrische Teile unterteilt und auf der gleichen Ebene wie einer der genannten Schafte (706) positioniert ist.

6. Verbindungskupplung nach Anspruch 1, wobei der das genannte zweite Teil (304) der Zwinge (4) eine Innenfläche enthält, die aus einer Vielzahl von sich verjüngenden konischen Abschnitten (504) gebildet ist, mit abnehmendem Vollschnitt und sich von dem genannten ersten Innengewindeteil (104) entfernt, die im Wesentlichen die gleiche Neigung haben und dazu geeignet sind eine Mehrfachkonizität zu bilden.

7. Verbindungskupplung nach Anspruch 2, wobei der genannte erste Ring (5) innen mit Kupplungszähnen (505) versehen ist und eine Außenfläche enthält, die aus einer Vielzahl von sich verjüngenden konischen Abschnitten (505) gebildet ist mit abnehmendem Vollschnitt und sich von dem genannten Innengewindeteil (104) der Zwinge (4) entfernt, die im Wesentlichen die gleiche Neigung dieser im Innern des genannten zweiten Teils (304) der Zwinge (4) konischen Abschnitte (504) haben und dazu geeignet sind in die letzteren einzufallen, da die genannten konischen Abschnitte (305) des genannten Rings (5) geeignet sind eine Mehrfachkonizität zu bilden.

8. Verbindungskupplung nach Anspruch 3, bei der der genannte erste Ring (5) eine Außenfläche enthält, die aus einer Vielzahl von in longitudinaler Richtung angeordneten Keilen (205) gebildet ist und von denen jeder mit diesen konischen Abschnitten (305) versehen ist.

9. Verbindungskupplung nach Anspruch 1, bei der der genannte erste Ring (5) innen mit Kupplungszähnen versehen ist und eine longitudinale Öffnung (405) enthält.

## Revendications

1. Ensemble de raccordement pour tubes de transport de fluides, comprenant un manchon (2) ayant une portion externe filetée (102) et frontalement pourvu d'une ouverture (202) pour insérer un tube (1), une bague (4) ayant au moins un premier anneau interne (5) pourvu de crans à l'intérieur (505), d'un raccord sur la surface externe du tube (1), où, lorsque le système est en marche, la bague (4) comprend une première partie filetée à l'intérieur (104) capable de s'imbriquer avec la portion filetée (102) du dit manchon (2) et une seconde partie (304) pourvue de éléments (504) permettant de serrer le premier anneau (5), où autour du tube (1), est prévu un second anneau (6) pourvu d'un premier composant annulaire (106) capable de pousser au moins un joint d'étanchéité (3) dans un emplacement cylindrique (302) prélevé dans le manchon (2) à partir de l'ouverture frontale (202), et un second composant annulaire (206, 706) en contact avec le bord de l'ouverture frontale (202) du manchon (2) et où le composant annulaire (106) et le second composant annulaire (206) sont pourvus de éléments (406, 506, 606, 706) capables de permettre un certain roulement longitudinal de l'un par rapport à l'autre, pendant lequel le joint d'étanchéité (3), le premier composant annulaire (106) et le second composant annulaire (206, 706) sont des parties de l'ensemble de raccordement et le premier composant annulaire (106) comprend un collier (306) permettant d'entrer en contact avec une surface annulaire (704) retranchée dans la bague (4) entre la première partie filetée intérieurement (104) et la seconde partie (304), **caractérisé en ce que:**
- ledit collier (306) du premier composant annulaire (106) comprend au moins un goujon (806, 806') saillant longitudinalement vers le premier anneau (5) et apte à s'imbriquer dans une paire de petits échelons (605) placés au même niveau que le bord d'une ouverture longitudinale (405) du premier anneau (5).

2. Ensemble de raccordement selon la revendication 1, dans laquelle le collier (306) du premier composant annulaire (106) possède sur sa surface latérale une pluralité de dents (906, 906') aptes à s'insérer dans une rainure annulaire appropriée (604) et retranchée dans la bague (4) entre la première partie filetée intérieurement (104) et la seconde partie (304).

3. Ensemble de raccordement selon les revendications 1 et 2, dans lesquelles le premier composant annulaire (106) comprend une pluralité de gorges (406) qui sont parcourues par une plaquette non saillante (506) intégrée au deuxième composant annulaire (206).

4. Ensemble de raccordement selon la revendication 3, dans laquelle le collier (306) est composé d'ouvertures longitudinales (606) dont la largeur est inférieure à celle de la microplaquette (506) et permet l'écoulement longitudinale d'une tige (706) reliée d'une part à la plaquette (506) et d'autre part au deuxième élément annulaire (206).

5. Ensemble de raccordement selon les précédentes revendications, dans lequel le goujon (806') est divisé en deux parties symétriques et est positionné correspondant au niveau d'une des tiges (706).

6. Ensemble de raccordement selon la revendication 1, dans lequel la seconde partie (304) de la bague (4) comprend une surface interne formée de plusieurs tracés tronconiques (504) à section interne décroissante, s'éloignant de la première partie filetée à l'intérieur (104), et ayant avant tout la même inclinaison et adaptés pour former une conicité multiple.

7. Ensemble de raccordement selon la revendication 2, dans lequel la première bague (5), équipée sur sa surface interne de crans (505) d'accrochage et pourvu d'une surface externe formée de plusieurs tracés tronconiques (305) à section interne décroissante, s'éloignant de la première partie filetée à l'intérieur (104) de la bague (4), et ayant principalement une inclinaison identique au tracés tronconiques (504) retranchés à l'intérieur de la seconde partie (304) de la bague (4) et capables d'être reliés avec ces derniers, étant les tracés tronconiques (305) de l'anneau (5) capables de former une conicité multiple.

8. Ensemble de raccordement selon la revendication 3, dans lequel la première bague (5) comprend une surface externe formée de plusieurs coins (205) disposés de manière longitudinale et équipés chacun de tracés tronconiques (305).

9. Ensemble de raccords selon la revendication 1, dans lequel la première bague (5), équipée sur sa surface interne de crans (505) d'accrochage, comprend une ouverture longitudinale (405).
